(19) Europäisches Patentamt
European Patent Office
Office européen des brevets

(11) **EP 4 386 016 A1**

(12) **EUROPEAN PATENT APPLICATION**
published in accordance with Art. 153(4) EPC

(43) Date of publication:
**19.06.2024 Bulletin 2024/25**

(21) Application number: **22896128.0**

(22) Date of filing: **18.11.2022**

(51) International Patent Classification (IPC):
*C08F 110/02* (2006.01)     *C08F 8/22* (2006.01)
*C08L 23/28* (2006.01)     *C08K 5/46* (2006.01)
*C08K 5/17* (2006.01)     *C08K 5/00* (2006.01)

(52) Cooperative Patent Classification (CPC):
**C08F 8/22; C08F 110/02; C08K 5/00; C08K 5/17;
C08K 5/46; C08L 23/28**

(86) International application number:
**PCT/KR2022/018292**

(87) International publication number:
**WO 2023/090931 (25.05.2023 Gazette 2023/21)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **18.11.2021  KR 20210159747
17.11.2022  KR 20220154687**

(71) Applicant: **LG Chem, Ltd.
Yeongdeungpo-gu
Seoul 07336 (KR)**

(72) Inventors:
• **KIM, Hyo Min**
**Daejeon 34122 (KR)**
• **HONG, Bog Ki**
**Daejeon 34122 (KR)**
• **PARK, Sunghyun**
**Daejeon 34122 (KR)**
• **KIM, Daehwan**
**Daejeon 34122 (KR)**
• **SEO, Jin Seok**
**Daejeon 34122 (KR)**

(74) Representative: **Hoffmann Eitle
Patent- und Rechtsanwälte PartmbB
Arabellastraße 30
81925 München (DE)**

(54) **POLYETHYLENE AND VULCANIZABLE CHLORINATED POLYETHYLENE COMPOSITION USING SAME**

(57)     In the present disclosure, there is provided a polyethylene in which the high molecular region ratio in the molecular structure is lowered, and the viscosity and melt index are optimized with a narrow molecular weight distribution. Therefore, it is possible to prevent premature cross-linking of chlorinated polyethylene obtained by reacting the polyethylene with chlorine, thereby minimizing a decrease in viscosity even after long-term storage and improving extrusion processability. Further, there is provided a vulcanizable chlorinated polyethylene composition using the polyethylene.

Processed by Luminess, 75001 PARIS (FR)

**Description**

[TECHNICAL FIELD]

**CROSS-REFERENCE TO RELATED APPLICATION(S)**

This application claims the benefit of Korean Patent Applications No. 10-2021-0159747 filed on November 18, 2021, and No. 10-2022-0154687 filed on November 17, 2022 with the Korean Intellectual Property Office, the disclosures of which are incorporated herein by reference in their entirety.

The present disclosure relates to a polyethylene and a vulcanizable chlorinated polyethylene composition using the same.

[BACKGROUND]

The chlorinated polyethylene prepared by reacting a polyethylene with chlorine is known to have more improved physical and mechanical properties than the polyethylene. In particular, since the chlorinated polyethylene is able to resist harsh external environments, it may be used as a packing material such as various containers, fibers, or hoses, and the like, and a heat transfer material.

Such chlorinated polyethylene is widely used as a material for rubber products and resin products, or as a raw material for adhesives and paints due to its excellent heat resistance, oil resistance, weather resistance, ozone resistance and abrasion resistance. In particular, the chlorinated polyethylene is attracting attention as a rubber material with its excellent heat resistance, oil resistance, weather resistance and ozone resistance.

Various proposals have already been made regarding the vulcanization of chlorinated polyethylene. For example, various sulfur-containing compounds such as organic peroxides and mercaptotriazines have been proposed as a vulcanizing agent for chlorinated polyethylene, and various organic vulcanization accelerators such as amine compounds are known to be used in combination with the vulcanizing agent. In addition, it is common knowledge to those skilled in the art that it is necessary to incorporate an acid-absorbing agent that absorbs an acid component slightly generated during vulcanization of chlorinated polyethylene into the composition for vulcanization. For example, Japanese Patent Laid-open Publication No. 1980-039250 proposes a metal compound selected from the group consisting of oxides, hydroxides, carboxylates, silicates, carbonates, phosphites, borates, basic sulfites, and tribasic sulfates of Group IVA metals of the periodic table as an acid-absorbing agent.

In addition, a composition for vulcanization containing a thiadiazole-based compound as a vulcanizing agent for chlorinated polyethylene is described in Japanese Patent Laid-Open Publication No. 1978-003439, and the like, and basic metal oxides, basic metal salts, basic metal hydroxides, etc. are used as a compounding agent.

The above-mentioned vulcanizing agent and its compounding agent can be used to increase strength of the vulcanizate or to keep the color white. However, when stored after compounding the vulcanizing agent with chlorinated polyethylene, there is a disadvantage in that extrusion processability deteriorates due to an increase in Mooney viscosity (MV).

Accordingly, in order to improve processability during extrusion with excellent strength of the vulcanizate, there is a continuous demand for the development of a technology capable of maintaining a high cross-linking efficiency while minimizing the rate of change in Mooney viscosity (MV) over time during long-term storage of the chlorinated polyethylene composition.

[DETAILED DESCRIPTION OF THE INVENTION]

[Technical Problem]

There is provided a polyethylene in which the high molecular region ratio in the molecular structure is lowered, and the viscosity and melt index are optimized with a narrow molecular weight distribution. The polyethylene can minimize the rate of change in Mooney viscosity (MV) over time even when the chlorinated polyethylene composition is stored for a long period of time so as to improve processability during extrusion with excellent strength of a vulcanizate.

In addition, there is provided a vulcanizable chlorinated polyethylene composition containing a chlorinated polyethylene using the above-mentioned polyethylene and a chlorinated polyethylene vulcanizate obtained by vulcanizing the same.

[Technical Solution]

According to one embodiment of the present disclosure, there is provided a polyethylene satisfying the following conditions:

> an integral value in the region where Log MW is 5.5 or more in a GPC curve graph having an x-axis of log MW and a y-axis of dw/dlogMw is 14% or less of the total integral value,
> a molecular weight distribution (Mw/Mn) is 5.8 or less,
> a complex viscosity ($\eta^*(\omega500)$) measured at a frequency ($\omega$) of 500 rad/s is 650 Pa·s to 850 Pa·s, and
> $MI_5$ (melt index measured at 190 °C under a load of 5 kg) is 1.2 g/10 min to 3.0 g/10 min.

In addition, there is provided a vulcanizable chlorinated polyethylene composition including a chlorinated polyethylene using the polyethylene.

In addition, there is provided a chlorinated polyethylene vulcanizate obtained by vulcanizing the vulcanizable chlorinated polyethylene composition.

[ADVANTAGEOUS EFFECTS]

According to the present disclosure, there is provided a polyethylene in which the high molecular region ratio in the molecular structure is lowered, and the viscosity and melt index are optimized with a narrow molecular weight distribution. Thus, the polyethylene can minimize the rate of change in Mooney viscosity (MV) over time even when the chlorinated polyethylene composition is stored for a long period of time so as to improve processability during extrusion with excellent strength of a vulcanizate.

[DETAILED DESCRIPTION OF THE EMBODIMENTS]

In the present disclosure, the terms "the first", "the second", and the like are used to describe a variety of components, and these terms are merely employed to distinguish a certain component from other components.

The terminology used herein is for the purpose of describing particular embodiments only and is not intended to be limiting of the invention. The singular forms are intended to include the plural forms as well, unless the context clearly indicates otherwise. It will be further understood that the terms "include", "have", or "possess" when used in this specification, specify the presence of stated features, numbers, steps, components, or combinations thereof, but do not preclude the presence or addition of one or more other features, numbers, steps, components, or combinations thereof.

The terminology "about" or "substantially" is intended to have meanings close to numerical values or ranges specified with an allowable error and intended to prevent accurate or absolute numerical values disclosed for understanding of the present invention from being illegally or unfairly used by any unconscionable third party.

As the present invention can be variously modified and have various forms, specific embodiments thereof are shown by way of examples and will be described in detail. However, it is not intended to limit the present invention to the particular form disclosed and it should be understood that the present invention includes all modifications, equivalents, and replacements within the idea and technical scope of the present invention.

Hereinafter, the present disclosure will be described in more detail.

**Polyethylene**

According to one embodiment of the present disclosure, the provided polyethylene has a molecular structure in which the high molecular region is optimized, and its viscosity and melt index are optimized with a narrow molecular weight distribution. Accordingly, the polyethylene can minimize the rate of change in MV over time even when stored for a long period of time after processing into a chlorinated polyethylene composition so as to improve processability during extrusion with excellent strength of a vulcanizate.

The polyethylene is characterized in that an integral value in the region where Log MW is 5.5 or more in a GPC curve graph having an x-axis of log MW and a y-axis of dw/dlogMw is 14% or less of the total integral value, a molecular weight distribution (Mw/Mn) is 5.8 or less, a complex viscosity ($\eta^*(\omega500)$) measured at a frequency ($\omega$) of 500 rad/s is 650 Pa·s to 850 Pa·s, and $MI_5$ (melt index measured at 190 °C under a load of 5 kg) is 1.2 g/10 min to 3.0 g/10 min.

The polyethylene according to the present disclosure optimizes the polymer structure, and realizes a narrow molecular weight distribution. Further, when a chlorinated polyethylene is prepared from the polyethylene according to the present disclosure and compounded, the premature cross-linking effect is suppressed, and the rate of change in compound MV over time can be improved during storage before extrusion.

In particular, when the content of the high molecular weight region is adjusted in the polymer structure of high-density polyethylene (HDPE), which is a material of chlorinated polyethylene (CPE), the HDPE polymer structure remains almost the same in CPE, which is a product of chlorination reaction. Therefore, the high molecular weight region is reduced, and the premature cross-linking reactivity is controlled, so that the rate of change in compound MV over time can be minimized.

Meanwhile, the polyethylene according to the present disclosure may be an ethylene homopolymer without a separate copolymer.

The polyethylene is characterized in that the high molecular region ratio is optimized to an integral value in the region where Log MW is 5.5 or more in a GPC curve graph having an x-axis of log MW and a y-axis of dw/dlogMw of 14% or less of the total integral value, and the complex viscosity at a high frequency and the melt index $MI_5$ (measured at 190 °C under a load of 5 kg) are maintained in the optimal range along with a narrow molecular weight distribution (Mw/Mn).

Specifically, the polyethylene may have an integral value in the region where Log MW is 5.5 or more in the GPC curve graph having the x-axis of log MW and the y-axis of dw/dlogMw of about 14% or less or about 0.5% to about 14%, about 13% or less or about 0.8% to about 13%, about 12% or less or about 1% to about 12%, about 11% or less or about 3% to about 11%, or about 10.5% or less or about 5% to about 10.5% of the total integral value. The polyethylene may have the above-described optimized high molecular region ratio in the molecular structure in the GPC graph, thereby improving mechanical properties such as tensile strength while securing high chlorination productivity and processability due to occurrence of a uniform chlorination reaction.

The polyethylene of the present disclosure is characterized in that the high molecular region ratio in the molecular structure is in the optimal range, as described above, and at the same time, a molecular weight distribution (Mw/Mn) is also optimized.

The molecular weight distribution of the polyethylene may be about 5.8 or less, or about 2.0 to about 5.8. This means that the molecular weight distribution of the polyethylene is narrow. When the molecular weight distribution is broad, a difference in the molecular weight between polyethylenes is large, and thus the chlorine contents of the polyethylenes after the chlorination reaction may vary, and thus the uniform distribution of chlorine is difficult. In addition, when a low molecular weight component is melted, fluidity becomes high, and as a result, pores of polyethylene particles may be blocked to reduce the chlorination productivity. In contrast, since the polyethylene of the present disclosure has the molecular weight distribution as described above, a difference in the molecular weight between polyethylenes after the chlorination reaction is not large, and therefore, chlorine may be uniformly substituted.

For example, the ratio in the region where Log MW is 5.5 or more in the GPC curve graph and the molecular weight distribution (Mw/Mn, polydispersity index) may be measured using gel permeation chromatography (GPC, manufactured by Water).

Herein, the molecular weight distribution (Mw/Mn, PDI, polydispersity index) may be determined by measuring a weight average molecular weight (Mw) and a number average molecular weight (Mn) of the polyethylene, and then dividing the weight average molecular weight by the number average molecular weight.

Specifically, the weight average molecular weight (Mw) and the number average molecular weight (Mn) of polyethylene may be measured using a polystyrene calibration curve. For example, PL-GPC220 manufactured by Waters may be used as the gel permeation chromatography (GPC) instrument, and a Polymer Laboratories PLgel MIX-B 300 mm length column may be used. An evaluation temperature may be 160 °C, and 1,2,4-trichlorobenzene may be used for a solvent at a flow rate of 1 mL/min. Each polyethylene sample may be pretreated by dissolving in 1,2,4-trichlorobenzene containing 0.0125% of BHT at 160 °C for 10 hours using a GPC analyzer (PL-GP220), and the sample with a concentration of 10 mg/10 mL may be supplied in an amount of 200 $\mu$L. Mw and Mn may be obtained using a calibration curve formed using a polystyrene standard. 9 kinds of the polystyrene standard are used with the molecular weight of 2000 g/mol, 10000 g/mol, 30000 g/mol, 70000 g/mol, 200000 g/mol, 700000 g/mol, 2000000 g/mol, 4000000 g/mol, and 10000000 g/mol.

The polyethylene may have a weight average molecular weight of about 100000 g/mol to about 158000 g/mol. Preferably, the weight average molecular weight of the polyethylene may be about 110000 g/mol or more, about 120000 g/mol or more, about 125000 g/mol or more, about 130000 g/mol or more, or about 135000 g/mol or more. In addition, the weight average molecular weight of the polyethylene may be about 155000 g/mol or less, about 152000 g/mol or less, about 150000 g/mol or less, about 148000 g/mol or less, about 146000 g/mol or less, about 145000 g/mol or less, or about 143000 g/mol or less.

Meanwhile, the polyethylene exhibits a complex viscosity ($\eta^*(\omega500)$) measured at a frequency ($\omega$) of 500 rad/s in an optimum range of about 650 Pa · s to about 850 Pa · s. Specifically, the complex viscosity ($\eta^*(\omega500)$) measured at the frequency ($\omega$) of 500 rad/s may be about 670 Pa · s or more, about 680 Pa · s or more, about 700 Pa · s or more, about 720 Pa · s or more, about 740 Pa · s or more, about 750 Pa · s or more, about 760 Pa · s or more, about 770 Pa · s or more, or about 780 Pa · s or more, and about 840 Pa · s or less, about 830 Pa · s or less, about 820 Pa · s or less, about 815 Pa · s or less, about 810 Pa · s or less, about 805 Pa · s or less, about 800 Pa · s or less, or about 795 Pa · s or less. The polyethylene of the present disclosure may maintain the above range of complex viscosity ($\eta^*(\omega500)$) measured at the frequency ($\omega$) of 500 rad/s, in terms of improving chlorination productivity while appropriately maintaining a processing load during extrusion for processing a compound product after a chlorination process.

Specifically, the complex viscosity can be measured using a rotational rheometer, for example, using ARES (Advanced Rheometric Expansion System, ARES G2) of TA instruments. Polyethylene samples were made to have a gap of 2.0 mm using parallel plates with a diameter of 25.0 mm at 190 °C. Measurement was conducted in a dynamic strain frequency sweep mode at a strain rate of 5% in the frequency range of 0.05 rad/s to 500 rad/s. 10 points for each decade, a total of 41 points, may be measured

Generally, for a perfectly elastic material, a deformation occurs in proportion to an elastic shear stress, which is called a Hook's law. In addition, for a pure viscose liquid, a deformation occurs in proportion to a viscous shear stress, which is called a Newton's law. For a completely elastic material, a deformation can be again restored when the elastic energy is accumulated and the elastic shear stress is removed. However, for a completely viscous material, the energy is completely discarded by deformation and thus the deformation is not restored even when the elastic shear stress is removed. In addition, the viscosity of the material itself does not change.

However, in a molten state, a polymer has an intermediate property between a completely elastic material and a viscous liquid, which is called a viscoelasticity. In other words, when a polymer is subjected to a shear stress in the molten state, the deformation is not proportional to the shear stress, and its viscosity varies depending on the shear stress, which is called a non-Newtonian fluid. These properties are due to the complexity of deformation due to the shear stress because the polymer has a huge molecular size and a complex intermolecular structure.

In particular, when producing a molded article by using a polymer, a shear-thinning phenomenon is considered as one of the important characteristics of the non-Newtonian fluid. The shear-thinning phenomenon means a phenomenon in which the viscosity of a polymer decreases as the shear rate increases. The method of molding a polymer is determined according to these shear-thinning properties. In particular, when manufacturing a large molded article such as a large-diameter pipe or a complex pipe as in the present disclosure, or a molded article requiring high-speed extrusion of the polymer, considerable pressure must be applied to the molten polymer. Therefore, unless the polymer exhibits the shear thinning properties, the manufacture of the molded article is difficult. For this reason, the shear thinning properties are considered important.

Therefore, the present disclosure measures the shear-thinning property by complex viscosity ($\eta^*$[Pa.s]) according to frequency ($\omega$[rad/s]). In particular, by optimizing the complex viscosity at a frequency ($\omega$) of 500 rad/s, excellent chlorination productivity and excellent compound properties may be realized. In particular, it is possible to predict the range of physical properties of the chlorinated polyethylene, such as the Moony viscosity (MV), through the complex viscosity at a frequency ($\omega$) of 500 rad/s.

Meanwhile, the polyethylene is characterized by exhibiting a high molecular region ratio in the molecular structure in an optimal range while maintaining a complex viscosity at a high frequency and a melt index $MI_5$ (measured at 190 °C under a load of 5 kg) in an optimal range with a narrow molecular weight distribution (Mw/Mn).

Specifically, the polyethylene has a melt index $MI_5$ of about 1.2 g/10 min to about 3.0 g/10 min, when measured at 190 °C under a load of 5 kg according to ASTM D 1238. Preferably, the melt index $MI_5$ may be about 1.3 g/10min or more, about 1.4 g/10min or more, about 1.5 g/10min or more, about 1.8 g/10min or more, about 2.0 g/10min or more, or about 2.2 g/10min or more, and about 2.95 g/10min or less, about 2.9 g/10min or less, about 2.85 g/10min or less, about 2.8 g/10min or less, about 2.75 g/10min or less, about 2.7 g/10min or less, about 2.6 g/10min or less, or about 2.5 g/10min or less.

In addition, a high load melt index $MI_{21.6}$ may be about 3 g/10 min to about 33.6 g/10 min, when measured under a load of 21.6 kg together with $MI_5$ measured under a load of 5 kg.

When any one of these melt indices $MI_5$ and $MI_{21.6}$ is too high, the low molecular weight content increases, and the shape change of particles increases such as the formation of lumps by melting low molecules at high temperatures during the chlorination process, resulting in poor thermal stability. Accordingly, the melt indices $MI_5$ and $MI_{21.6}$ should be about 2.8 g/10 min or less and about 33.6 g/10 min or less, respectively, for excellent thermal stability. However, as the melt indices $MI_5$ and $MI_{21.6}$ are lower, the viscosity increases, and physical properties such as Mooney viscosity are out of the optimal range when producing chlorinated polyethylenes, resulting in a problem of poor dispersion of inorganic substances. Accordingly, the melt indices $MI_5$ and $MI_{21.6}$ may be about 1.5 g/10 min or more and about 3 g/10 min or more, respectively, in terms of reducing an extrusion processing load during product processing and securing excellent physical properties.

Further, the polyethylene of the present disclosure preferably optimizes a melt flow rate ratio ($MFRR_{21.6/5}$, a value obtained by dividing the melt index measured at 190 °C under a load of 21.6 kg by the melt index measured at 190 °C under a load of 5 kg in accordance with ASTM D 1238) while optimizing the melt index $MI_5$ as described above. At this time, the melt flow rate ratio ($MFRR_{21.6/5}$, a value obtained by dividing the melt index measured at 190 °C under a load of 21.6 kg by the melt index measured at 190 °C under a load of 5 kg in accordance with ASTM D 1238) of the polyethylene may be about 2 to about 12. Specifically, the melt flow rate ratio may be about 2 or more in terms of processability during extrusion, and may be about 12 or less in terms of securing excellent mechanical properties by increasing the Mooney viscosity (MV) of CPE.

Meanwhile, the polyethylene may have a density of about 0.945 g/cm$^3$ to about 0.960 g/cm$^3$, about 0.948 g/cm$^3$ to about 0.958 g/cm$^3$, about 0.950 g/cm$^3$ to about 0.957 g/cm$^3$, about 0.951 g/cm$^3$ to about 0.956 g/cm$^3$, or about 0.952

$g/cm^3$ to about 0.955 $g/cm^3$. In particular, the polyethylene has a density of about 0.945 $g/cm^3$ or more, which means that the polyethylene has a high content of crystalline part and is dense, and therefore, the crystal structure of the polyethylene is difficult to change during chlorination. However, when the density of the polyethylene exceeds about 0.960 $g/cm^3$, the content of crystalline structure of the polyethylene becomes too high, and as a result, TREF crystallinity distribution becomes too wide and high, and the molecular weight distribution becomes wide, thereby increasing the heat of fusion during CPE processing and decreasing processability. Accordingly, it is desirable that the polyethylene of the present disclosure has a density in the above range, in terms of securing excellent extrusion processability and size stability even in a high-speed extrusion process when applied to electric wires or cables, and the like, and exhibiting excellent mechanical properties such as tensile strength.

Meanwile, the polyethylene according to one embodiment of the present disclosure may be prepared by polymerizing ethylene in the presence of a Ziegler-Natta catalyst in terms of maintaining the complex viscosity at a high frequency and the melt index $MI_5$ (measured at 190 °C under a load of 5 kg) in an optimal range with a narrow molecular weight distribution (Mw/Mn) while exhibiting the high molecular region ratio in the molecular structure in an optimal range.

**Vulcanizable Chlorinated Polyethylene Composition**

According to another embodiment of the present disclosure, there is provided a vulcanizable chlorinated polyethylene composition including a chlorinated polyethylene using the above-described polyethylene.

Specifically, the vulcanizable chlorinated polyethylene composition includes a chlorinated polyethylene prepared by reacting the above-described polyethylene with chlorine, a sulfide-based cross-linking agent or a derivative thereof, and an amine compound or a derivative thereof.

Hereinafter, each component constituting the vulcanizable chlorinated polyethylene composition of one embodiment will be described in detail.

**(a) Chlorinated Polyethylene**

In the vulcanizable chlorinated polyethylene composition according to the present disclosure, the chlorinated polyethylene can be prepared by reacting the above-described polyethylene with chlorine, wherein the polyethylene has a molecular structure in which the high molecular region ratio is lowered and its viscosity and melt index are optimized with a narrow molecular weight distribution.

The reaction with chlorine may be carried out by dispersing the prepared polyethylene with water, an emulsifier, and a dispersant, and then adding a catalyst and chlorine thereto.

The emulsifier may be polyether or polyalkylene oxide. The dispersant may be a polymer salt or an organic acid polymer salt, and the organic acid may be methacrylic acid or acrylic acid.

The catalyst may be a chlorination catalyst used in the art, and for example, benzoyl peroxide may be used. The chlorine may be used alone, or may be used with an inert gas.

The chlorination reaction may be preferably performed at about 60 °C to about 150 °C, about 70 °C to about 145 °C, or about 80 °C to about 140 °C and the reaction time may preferably be about 10 minutes to about 10 hours, about 1 hour to about 9 hours, or about 2 hours to about 8 hours.

The chlorinated polyethylene prepared by the above reaction may be further subjected to a neutralization process, a washing process, and/or a drying process, and thus may be obtained in the form of powder.

In particular, when the content of the high molecular weight region is adjusted in the polymer structure of high-density polyethylene (HDPE), the HDPE polymer structure remains almost the same in CPE, which is a product of chlorination reaction. Therefore, the high molecular weight region is reduced, and the premature cross-linking reactivity is controlled, so that the rate of change in compound MV over time can be minimized.

Meanwhile, the chlorinated polyethylene may have a chlorine content of about 20 wt% to about 50 wt%, about 31 wt% to about 45 wt%, or about 35 wt% to about 40 wt%. Herein, the chlorine content of the chlorinated polyethylene may be measured using combustion ion chromatography (Combustion IC, Ion Chromatography). For example, the combustion ion chromatography uses a combustion IC (ICS-5000/AQF-2100H) device equipped with an IonPac AS18 (4 x 250 mm) column. The chlorine content may be measured using KOH (30.5 mM) as an eluent at a flow rate of 1 mL/min at an inlet temperature of 900 °C and an outlet temperature of 1000 °C. In addition, conventional methods in the art may be applied to the device conditions and measurement conditions for measuring the chlorine content.

The chlorinated polyethylene may be, for example, a randomly chlorinated polyethylene.

In addition, the chlorinated polyethylene may be a mixture of polymers having different chlorine contents, for example, a blend of a large proportion of chlorine-containing polyethylene with a small proportion of other rubbers and/or resins. For example, the chlorinated polyethylene may be blended with nitrile rubber, acrylic rubber, and the like. Such blending is performed for the purpose of improving oil resistance, heat resistance, and the like.

The above-described chlorinated polyethylene is a major component in the vulcanizable chlorinated polyethylene composition of the present disclosure.

**(b) Sulfide-Based Cross-Linking Agent or Derivatives Thereof**

Meanwhile, the vulcanizable chlorinated polyethylene composition of the present disclosure includes the chlorinated polyethylene prepared by reacting the above-described polyethylene and chlorine, and a sulfide-based cross-linking agent or a derivative thereof for the vulcanization process of the chlorinated polyethylene.

Specifically, the sulfide-based cross-linking agent may comprise a thiadiazole-based compound or a disulfide-based compound.

Preferably, the sulfide-based cross-linking agent may comprise at least one selected from the group consisting of 2,5-dimercapto-1,3,4-thiadiazole and 5,5'-dithiodi-1,3,4-thiadiazole-2(3H)-thione (manufacturer: Vanderbilt Chemicals, LLC, product name: Vanax-829).

In particular, it is more advantageous to use a disulfide thiadiazole-based cross-linking agent in terms of controlling the vulcanization reaction of chlorinated polyethylene to have a lower rate of change in MV over time.

The sulfide-based cross-linking agent or the derivative thereof may be contained in an amount of 0.1 parts by weight to 4 parts by weight based on 100 parts by weight of the chlorinated polyethylene. When the amount of the disulfide-based cross-linking agent or the derivative thereof is less than 0.1 parts by weight based on 100 parts by weight of the chlorinated polyethylene, vulcanization performance may decrease, resulting in deterioration in physical properties of the final product. In addition, when the disulfide-based cross-linking agent or the derivative thereof is used in an amount exceeding 4 parts by weight based on 100 parts by weight of the chlorinated polyethylene, the rate of change in MV increases or the cross-linking rate decreases due to excessive vulcanization reaction, resulting in decreased productivity. The disulfide-based cross-linking agent or the derivative thereof is contained in an amount of 0.5 parts by weight or more, 1 parts by weight or more, 1.5 parts by weight or more, or 1.8 parts by weight or more, and 3.5 parts by weight or less, 3 parts by weight or less, 2.5 parts by weight or less, or 2.45 parts by weight or less.

For reference, "parts by weight" as used herein refers to a relative concept of a ratio of the weight of the remaining material based on the weight of a specific material. For example, in a mixture containing 50 g of material A, 20 g of material B, and 30 g of material C, the amounts of material B and C based on 100 parts by weight of material A are 40 parts by weight and 60 parts by weight, respectively.

In addition, "wt% (% by weight)" refers to an absolute concept of expressing the weight of a specific material in percentage based on the total weight. In the above-described mixture, the contents of material A, B and C based on 100% of the total weight of the mixture are 50%, 20% and 30% by weight, respectively. At this time, a sum of contents of each component does not exceed 100 weight%.

**(c) Amine Compound or Derivatives Thereof**

Meanwhile, the vulcanizable chlorinated polyethylene composition according to the present disclosure blends a cross-linking agent such as a sulfide-based cross-linking agent or a derivative thereof with the chlorinated polyethylene, and includes an amine compound or a derivative thereof as an organic vulcanization accelerator.

In particular, when using only a sulfide-based cross-linking agent or using a compound other than an amine compound, the vulcanization reaction may not proceed. When an amine compound or a derivative thereof is added to the cross-linking agent, a vulcanization reaction proceeds, so that physical properties of the final product can be secured.

Specifically, the amine compound is characterized in that it is a secondary amine compound or a tertiary amine compound. For example, the amine compound may include at least two $C_{4-20}$ alkyl groups, preferably at least two $C_{5-15}$ alkyl groups, $C_{6-12}$ alkyl groups, or $C_{7-10}$ alkyl groups in its structure.

For example, the amine compound may comprise a high molecular-weight fatty amine and may be a secondary amine or a tertiary amine containing at least two alkyl groups having 5 or more carbon atoms. For example, the amine compound may be at least one selected from the group consisting of dihexadecylamine, trihexadecylamine, and a mixture thereof.

These amine compounds may be used alone or in combination of two or more.

The amine compound or the derivative thereof is contained in an amount of 0.1 to 2 parts by weight based on 100 parts by weight of the chlorinated polyethylene. The amine compound or the derivative thereof is contained in an amount of 0.2 parts by weight or more, 0.3 parts by weight or more, 0.5 parts by weight or more, or 0.8 parts by weight or more, and 1.9 parts by weight or less, 1.8 parts by weight or less, 1.7 parts by weight or less or less, or 1.5 parts by weight or less.

Specifically, the vulcanizable chlorinated polyethylene composition of the present disclosure contains 0.1 to 4 parts by weight of the sulfide-based cross-linking agent or the derivative thereof, and 0.1 to 2 parts by weight of the amine compound or the derivative thereof based on 100 parts by weight of the chlorinated polyethylene described above.

**(d) Other Additives**

Meanwhile, the vulcanizable chlorinated polyethylene composition according to the present disclosure blends a sulfide-based cross-linking agent or a derivative thereof and an amine compound or a derivative thereof with the chlorinated polyethylene, and may further include at least one additive such as an inorganic vulcanization accelerator such as a calcium-based inorganic base.

In particular, in the case of additionally including one or more additives such as an inorganic vulcanization accelerator such as a calcium-based inorganic base containing calcium ($Ca^{2+}$), the rate of change in Mooney viscosity (MV) when the vulcanizable chlorinated polyethylene composition is stored for a long period of time is minimized, thereby improving extrusion processability.

Specifically, the vulcanizable chlorinated polyethylene composition may include at least one additive selected from the group consisting of calcium stearate ($[CH_3(CH_2)_{16}COO]_2Ca$), calcium carbonate ($CaCOs$), calcium hydroxide ($Ca(OH)_2$), and calcium oxide ($CaO$).

These additives may be used alone or in combination of two or more.

Meanwhile, the calcium-based inorganic base may have a pH (20 °C, $H_2O$) of 7 to 12, 7.5 to 11, or 8 to 10.

The pH can be measured by a pH titration method or a potentiometric pH meter commonly used in the art to which the present invention belongs. Specifically, it can be measured using a pH meter with a glass electrode, for example, a Metter Toleo SevenExellence pH meter. When the sample is in the form of solid rather than aqueous solution, the pH can be measured after mixing 10 g of the solid sample in 100 g of distilled water, followed by stirring for 10 minutes.

The calcium-based inorganic base is contained in an amount of 0.1 to 4.5 parts by weight based on 100 parts by weight of the chlorinated polyethylene. When the calcium-based inorganic base is contained in an amount of less than 0.1 parts by weight based on 100 parts by weight of the chlorinated polyethylene, agglomeration between CPE may occur, which may cause problems in subsequent processing, or the rate of change in MV may increase due to excessive vulcanization. In addition, when the calcium-based inorganic base is used in excess of 4.5 parts by weight based on 100 parts by weight of the chlorinated polyethylene, vulcanization performance may decrease, resulting in a decrease in physical properties of the final product or affecting the rate of change in MV or processability. The calcium-based inorganic base is contained in an amount of 0.3 parts by weight or more, 0.4 parts by weight or more, 0.45 parts by weight or more, 0.48 parts by weight or more, or 0.5 parts by weight or more, and 4.0 parts by weight or less, 3.8 parts by weight or less, 3.5 parts by weight or less, 3.05 parts by weight or less, 2.8 parts by weight or less, 2.5 parts by weight or less, or 2 parts by weight or less.

Specifically, the vulcanizable chlorinated polyethylene composition of the present disclosure may contain 0.1 to 4 parts by weight of the sulfide-based cross-linking agent or the derivative thereof, 0.1 to 2 parts by weight of the amine compound or the derivative thereof, and 0.1 to 4.5 parts by weight of one or more additives selected from the group consisting of calcium stearate, calcium carbonate, calcium hydroxide, and calcium oxide based on 100 parts by weight of the chlorinated polyethylene described above.

Meanwhile, the vulcanizable chlorinated polyethylene composition according to the present disclosure can minimize the rate of change in MV over time even when the chlorinated polyethylene composition is stored for a long period of time so as to improve processability during extrusion with excellent strength of a vulcanizate.

Specifically, the vulcanizable chlorinated polyethylene composition may have a rate of change in Mooney viscosity over time (%) according to the following Equation 1 of 20% or less, or 0 to 20%.

[Equation 1]

Rate of change in Mooney viscosity over time (%) = [(MV2-MV1) / MV1] X 100

wherein in Equation 1,

MV1 is an initial Mooney viscosity measured immediately after preparing the vulcanizable chlorinated polyethylene composition under the conditions of ML1+4 (125 °C) in accordance with ASTM D 1646, and
MV2 is a Mooney viscosity after aging measured after storing the vulcanizable chlorinated polyethylene composition in an oven at 40 °C for 2 weeks under the conditions of ML1+4 (125 °C) in accordance with ASTM D 1646.

The vulcanizable chlorinated polyethylene composition may have the rate of change (%) in Mooney viscosity over time according to Equation 1 of preferably 18% or less, 17% or less, 16.8% or less, 16.5% or less, 16.0% or less, 15.8% or less, or 15.5% or less. However, considering that the Mooney viscosity substantially increases during long-term storage, the rate of change (%) in Mooney viscosity over time according to Equation 1 may be 0.1% or more, 0.2% or more, or 0.3% or more.

At this time, the vulcanizable chlorinated polyethylene composition, as described above, may have the initial Mooney viscosity (MV1) of 40 MU to 90 MU, 43 MU to 80 MU, 45 MU to 75 MU, 48 MU to 72 MU, or 50 MU to 70 MU, wherein the the initial Mooney viscosity is measured immediately after blending a specific disulfide-based cross-linking agent or a derivative thereof, an amine compound or a derivative thereof, and a calcium-based inorganic base with the chlorinated polyethylene under the conditions of ML1+4 (125 °C) in accordance with ASTM D 1646.

In addition, the vulcanizable chlorinated polyethylene composition may have the Mooney viscosity after aging (MV2) of 45 MU to 100 MU, 48 MU to 90 MU, 50 MU to 88 MU, 52 MU to 85 MU, or 53 MU to 82 MU, wherein the the Mooney viscosity after aging is measured after storing the vulcanizable chlorinated polyethylene composition in an oven at 40 °C for 2 weeks under the conditions of ML1+4 (125 °C) in accordance with ASTM D 1646.

For reference, the unit of the Mooney viscosity is expressed as MU (mooney unit), and a value of ML1+4 is obtained at 125 °C, wherein M is moony, L is a size of plate, 1 refers to preheating for 1 minute, and 4 refers to reading the value after 4 minutes of rotor operation in the mooney viscometer. The specific measurement method and conditions are shown in Test Examples to be described later, and detailed descriptions are omitted.

As described above, the vulcanizable chlorinated polyethylene composition according to the present disclosure has the characteristics of maintaining a high cross-linking efficiency while minimizing the rate of change in Mooney viscosity (MV) over time even during long-term storage.

Specifically, the vulcanizable chlorinated polyethylene composition may have an initial cross-linking efficiency (MH-ML, dNm) of 6.5 dNm or more or 6.5 dNm to 15 dNm, preferably 6.8 dNm or more, 7.0 dNm or more, 7.5 dNm or more, or 7.8 dNm or more, and 13.5 dNm or less, 11 dNm or less, 10 dNm or less, 9.0 dNm or less, or 8.8 dNm or less, when measured under the conditions of a vibration angle of 0.5 degrees, a temperature of 180 °C, and for 1 hour in accordance with ASTM D 5289.

Meanwhile, the vulcanizable chlorinated polyethylene composition of the present disclosure may further contain various compounding agents commonly used in the art such as a filler, a reinforcing agent, a plasticizer, a stabilizer, an anti-aging agent, a lubricant, a viscosity imparting agent, a pigment, a flame retardant, an ultraviolet absorber, a foaming agent, a vulcanization agent, etc. In addition, short fibers and the like may be added to improve strength and rigidity.

In order to obtain the vulcanizable chlorinated polyethylene composition according to the present disclosure, the above compounding materials are kneaded using a conventional mixing roll, a Van Barry mixer, a twin-screw kneading extruder, various kneaders, etc., and then the obtained kneaded product is formed into a desired shape such as a sheet using an open roll, etc. Molding or vulcanization can be performed using a press, extruder, injection molding machine, or the like to obtain a rubber product with a desired shape. Curing conditions are appropriately selected in the range of several minutes to 2 hours at 100 °C to 200 °C.

**Vulcanizates**

According to another embodiment of the present disclosure, there is provided a vulcanizate having good vulcanization properties obtained by vulcanizing the above-described vulcanizable chlorinated polyethylene composition.

In particular, a vulcanized product having excellent strength and improved processability during extrusion is provided by vulcanizing a vulcanizable chlorinated polyethylene composition including a chlorinated polyethylene prepared using the above-described polyethylene, wherein the polyethylene has a molecular structure in which the high molecular region is optimized, and its complex viscosity at a high frequency and melt index $MI_5$ (measured at 190°C under a load of 5 kg) are optimized with a narrow molecular weight distribution (Mw/Mn).

In order to obtain a laminate or a laminated hose having a layer composed of the vulcanizable chlorinated polyethylene composition, a well-known conventional laminate method or extrusion molding technique can be used. For example, the laminate can be obtained by directly laminating a layer composed of the vulcanizable chlorinated polyethylene composition on a layer composed of epichlorohydrin rubber, nitrile rubber, nitrile rubber blended with polyvinyl chloride, or acrylic rubber, and vulcanizing the composition. In addition, a hose including an inner layer composed of epichlorohydrin rubber, nitrile rubber, nitrile rubber blended with polyvinyl chloride or acrylic rubber and an outer layer composed of the composition for vulcanization is formed, and then the composition is vulcanized to obtain a laminated hose.

Hereinafter, preferred examples are provided to aid in understanding the present invention. However, these examples are for illustrative purposes only, and the invention is not intended to be limited by these examples.

**[EXAMPLES]**

**<Examples 1-1 to 1-3 and Comparative Examples 1-1 to 1-9>**

Ethylene was polymerized in the presence of a Ziegler-Natta catalyst to prepare a high-density polyethylene (HDPE) having properties shown in Table 1 below in Examples 1-1 to 1-3 and Comparative Examples 1-1 to 1-9.

The physical properties of the high-density polyethylene (HDPE) were measured in the following manner, and the results are shown in Table 1 below.

**1) Melt index (MI, g/10min):**

The melt index ($MI_5$) was measured in accordance with the ASTM D 1238 method at a temperature of 190 °C under a load of 5 kg. A weight (g) of the polymer melted for 10 minutes was recorded as the melt index.

**2) Density:**

The density (g/cm$^3$) of each polyethylene was measured in accordance with the ASTM D 1505 method.

**3) Complex viscosity of polyethylene (Pa·s, 500rad/s):**

The complex viscosity for each polyethylene of Examples 1 to 2 and Comparative Examples 1 to 5 was measured using a rotary rheometer (ARES Rheometer) at 190 °C and a frequency ($\omega$) of 0.05 rad/s to 500 rad/s.

Specifically, the complex viscosity of each polyethylene was determined by measuring complex viscosity $\eta^*(\omega 0.05)$ and $\eta^*(\omega 500)$ according to frequency using a rotary rheometer ARES (Advanced Rheometric Expansion System, ARES G2) of TA instruments (New Castle, Delaware). A predetermined amount of the polyethylene was injected into ARES-G2 instrument and 25 mm parallel plates and ring, and the gap between parallel plates with a diameter of 25.0 mm became 2.0 mm by pressing upper and lower fixture at 190 °C. Measurements were conducted in a dynamic strain frequency sweep mode and at a strain rate of 5% and a frequency (angular frequency) of 0.05 rad/s to 500 rad/s. 10 points for each decade, a total of 41 points, were measured. Among them, the complex viscosity measured at a frequency ($\omega$) of 500 rad/s was shown in Table 1 below.

**4) Molecular weight distribution (Mw/Mn, polydispersity index) and Log MW (5.5 or more) ratio:**

The molecular weight distribution (PDI, Mw/Mn) was determined by measuring a weight average molecular weight (Mw) and a number average molecular weight (Mn) of the polyethylene using gel permeation chromatography (GPC, manufactured by Water), and then dividing the weight average molecular weight by the number average molecular weight.

Specifically, PL-GPC220 manufactured by Waters was used as the gel permeation chromatography (GPC) instrument, and a Polymer Laboratories PLgel MIX-B 300 mm length column was used. An evaluation temperature was 160 °C, and 1,2,4-trichlorobenzene was used for a solvent at a flow rate of 1 mL/min. Each polyethylene sample according to Examples and Comparative Examples was pretreated by dissolving in 1,2,4-trichlorobenzene containing 0.0125% of BHT at 160 °C for 10 hours using a GPC analyzer (PL-GP220), and the sample with a concentration of 10 mg/10 mL was supplied in an amount of 200 $\mu$L. Mw and Mn were obtained using a calibration curve formed using a polystyrene standard. 9 kinds of the polystyrene standard were used with the molecular weight of 2000 g/mol, 10000 g/mol, 30000 g/mol, 70000 g/mol, 200000 g/mol, 700000 g/mol, 2000000 g/mol, 4000000 g/mol, and 10000000 g/mol.

Further, a ratio (%) of an integral value in the region where Log MW is 5.5 or more of the total integral value in a log graph with respect to the weight average molecular weight (Mw) of the polyethylene thus measured, which is a GPC curve graph having an x-axis of log MW and a y-axis of dw/dlogMw, was calculated, and shown in Table 1 below.

[Table 1]

| | $MI_5$ (g/10min) | Density (g/mL) | Complex viscosity (Pa·s) | Mw (kg/mol) | PDI (Mw/Mn) | logMw$\geq$5.5 (%) |
|---|---|---|---|---|---|---|
| Ex. 1-1 | 2.5 | 0.9544 | 794 | 139 | 5.8 | 10.5 |
| Ex. 1-2 | 1.7 | 0.9548 | 815 | 134 | 5.4 | 10.1 |
| Ex. 1-3 | 2.8 | 0.9543 | 730 | 143 | 5.6 | 9.5 |
| Comp. Ex. 1-1 | 1.3 | 0.9581 | 740 | 182 | 11.6 | 15.4 |
| Comp. Ex. 1-2 | 1.2 | 0.9517 | 850 | 164 | 6.7 | 13.9 |

(continued)

| | MI$_5$ (g/ 10min) | Density (g/mL) | Complex viscosity (Pa·s) | Mw (kg/mol) | PDI (Mw/Mn) | logMw$\geq$5.5 (%) |
|---|---|---|---|---|---|---|
| Comp. Ex. 1-3 | 1.1 | 0.9518 | 850 | 167 | 7.1 | 14.6 |
| Comp. Ex. 1-4 | 0.45 | 0.9508 | 1370 | 213 | 5.3 | 19.0 |
| Comp. Ex. 1-5 | 1.5 | 0.9520 | 800 | 153 | 5.7 | 15.3 |
| Comp. Ex. 1-6 | 2.9 | 0.9531 | 645 | 122 | 5.8 | 13.7 |
| Comp. Ex. 1-7 | 1.2 | 0.9580 | 875 | 157 | 5.8 | 14.0 |
| Comp. Ex. 1-8 | 1.0 | 0.9576 | 848 | 150 | 5.7 | 14.0 |
| Comp. Ex. 1-9 | 3.2 | 0.9574 | 656 | 174 | 5.8 | 13.8 |

As shown in Table 1, it was confirmed in Examples that the high molecular region ratio in the molecular structure is in the optimal range, and the complex viscosity at a high frequency and the melt index MI$_5$ (measured at 190 °C under a load of 5 kg) are optimized with a narrow molecular weight distribution (Mw/Mn), in contrast to Comparative Examples.

**<Examples 2-1 to 2-3 and Comparative Examples 2-1 to 2-9>**

Chlorinated polyethylene (CPE) powder was prepared using the high-density polyethylene (HDPE) according to one of Examples 1-1 to 1-3 and Comparative Examples 1-1 to 1-9 as follows, and then a cross-linking agent and a cross-linking aid/additive were added thereto and mixed to obtain a vulcanizable chlorinated polyethylene composition according to one of Examples 2-1 to 2-3 and Comparative Examples 2-1 to 2-9.

**I) Preparation of chlorinated polyethylene**

5000 L of water and 550 kg of the high-density polyethylene prepared in Example 1-1 were added to a reactor, and then sodium polymethacrylate as a dispersant, oxypropylene and oxyethylene copolyether as an emulsifier, and benzoyl peroxide as a catalyst were added thereto. Then, the temperature was raised from 80 °C to 132 °C at a rate of 17.3 °C/hr and chlorination was carried out by injecting gaseous chlorine at a final temperature of 132 °C for 3 hours. At this time, the chlorination reaction was performed by injecting the gaseous chlorine at a reactor pressure of 0.3 MPa while raising the temperature, and a total input of chlorine was 700 kg. The chlorinated reactant was neutralized with NaOH for 4 hours, washed again with running water for 4 hours, and finally dried at 120 °C to prepare a chlorinated polyethylene in the form of powder.

In addition, chlorinated polyethylenes in the form of powder were also prepared using the high-density polyethylenes (HDPE) of Examples 1-2 to 1-3 and Comparative Examples 1-1 to 1-9 in the same manner as described above.

**II) Preparation of chlorinated polyethylene composition**

As described above, 2.25 parts by weight of 5,5'-dithiodi-1,3,4-thiadiazole-2(3H)-thione (manufacturer: Vanderbilt Chemicals, LLC, Product name: Vanax-829) as a cross-linking agent, and 0.9 parts by weight of high molecular-weight fatty amine (dihexadecyl amine, NH((CH2)15CH3)2, manufacturer: Vanderbilt Chemicals, LLC, Product name: Vanax-882B) were mixed with 100 parts by weight of the chlorinated polyethylene powder prepared using one of the high-density polyethylenes (HDPE) of Examples 1-1 to 1-3 and Comparative Examples 1-1 to 1-9 to obtain vulcanizable chlorinated polyethylene compositions of Examples 2-1 to 2-3 and Comparative Examples 2-1 to 2-9, respectively.

The vulcanizable chlorinated polyethylene compositions of Examples 2-1 to 2-3 and Comparative Examples 2-1 to 2-9 prepared as described above were roll-milled at room temperature to prepare sheet-type specimens, and physical properties of the sheets were measured as follows.

**1) Initial Mooney viscosity (MV1) and Mooney viscosity after aging (MV2)**

The initial Mooney viscosity (MV1) and the Mooney viscosity after aging (MV2) were measured under the conditions of ML1+4 (125 °C) in accordance with the ASTM D 1646 method.

Specifically, the initial Mooney viscosity (MV1) was measured immediately after preparing sheet-type specimens as described above using the chlorinated polyethylene compositions of Examples and Comparative Examples. In addition, the sheet thus prepared was stored in an oven at 40 °C for 2 weeks, and then MV after aging for 2 weeks was measured and expressed as the Mooney viscosity after aging (MV2). Using the initial Mooney viscosity (MV1) and the Mooney viscosity after aging (MV2) measured as described above, the rate or change in Mooney viscosity over time (%) was calculated according to Equation 1 below.

[Equation 1]

$$\text{Rate of change in Mooney viscosity over time (\%)} = [(MV2-MV1) / MV1] \times 100$$

in Equation 1,

MV1 is an initial Mooney viscosity measured immediately after preparing the vulcanizable chlorinated polyethylene composition under the conditions of ML1+4 (125 °C) in accordance with ASTM D 1646, and
MV2 is a Mooney viscosity after aging measured after storing the vulcanizable chlorinated polyethylene composition in an oven at 40 °C for 2 weeks under the conditions of ML1+4 (125°C) in accordance with ASTM D 1646.

For reference, the unit of the Mooney viscosity is expressed as MU (mooney unit), and a value of ML1+4 is obtained at 125 °C, wherein M is moony, L is a size of plate, 1 refers to preheating for 1 minute, and 4 refers to reading the value after 4 minutes of rotor operation in the mooney viscometer.

The initial Mooney viscosity (MV1) and the Mooney viscosity after aging (MV2) of the vulcanizable chlorinated polyethylene compositions of Examples and Comparative Examples thus measured, and the rate of change in Mooney viscosity over time (%) calculated therefrom are shown in Table 2 below.

[Table 2]

|  | Initial MV (MV1, MU) | MV after aging (MV2, MU) | Rate of change in MV (%) |
|---|---|---|---|
| Ex. 2-1 | 69.7 | 80.5 | 15.5 |
| Ex. 2-2 | 62.3 | 71.2 | 14.3 |
| Ex. 2-3 | 65.7 | 73.4 | 11.7 |
| Comp. Ex. 2-1 | 60.8 | 79.7 | 31.1 |
| Comp. Ex. 2-2 | 69.6 | 107.0 | 53.7 |
| Comp. Ex. 2-3 | 79.3 | 119.8 | 51.1 |
| Comp. Ex. 2-4 | 123.4 | 170.2 | 37.9 |
| Comp. Ex. 2-5 | 81.1 | 107.1 | 32.1 |
| Comp. Ex. 2-6 | 62.7 | 76.7 | 22.3 |
| Comp. Ex. 2-7 | 68.9 | 86.3 | 25.3 |
| Comp. Ex. 2-8 | 70.1 | 88.8 | 26.7 |
| Comp. Ex. 2-9 | 115.6 | 143.6 | 24.2 |

As shown in Table 2, it was confirmed that the vulcanizable chlorinated polyethylene compositions of Examples 2-1 to 2-3 including the chlorinated polyethylene prepared using one of the polyethylenes of Examples 1-1 to 1-3 according to the present disclosure significantly improved the rate of change in Mooney viscosity over time (2 weeks) to 11.7% to 15.5% compared to Comparative Examples, wherein the polyethylene has a molecular structure in which the high molecular region ratio is lowered, and its viscosity and melt index are optimized with a narrow molecular weight distribution.

**Claims**

1.  A polyethylene satisfying the following conditions:

    an integral value in a region where Log MW is 5.5 or more in a GPC curve graph having an x-axis of log MW and a y-axis of dw/dlogMw is 14% or less of a total integral value,
    a molecular weight distribution (Mw/Mn) is 5.8 or less,
    a complex viscosity ($\eta^*(\omega 500)$) measured at a frequency ($\omega$) of 500 rad/s is 650 Pa·s to 850 Pa·s, and
    $MI_5$ (melt index measured at 190 °C under a load of 5 kg) is 1.2 g/10 min to 3.0 g/10 min.

2.  The polyethylene according to Claim 1, wherein the polyethylene is an ethylene homopolymer.

3.  The polyethylene according to Claim 1, wherein the polyethylene has the integral value in the region where Log MW is 5.5 or more in the GPC curve graph having the x-axis of log MW and the y-axis of dw/dlogMw of 0.5% to 14% of the total integral value.

4.  The polyethylene according to Claim 1, wherein the polyethylene has the molecular weight distribution (Mw/Mn) of 2.0 to 5.8.

5.  The polyethylene according to Claim 1, wherein the polyethylene has the complex viscosity ($\eta^*(\omega 500)$) of 700 Pa·s to 820 Pa·s when measured at the frequency ($\omega$) of 500 rad/s.

6.  The polyethylene according to Claim 1, wherein the polyethylene has the $MI_5$ (melt index measured at 190 °C under a load of 5 kg) of 1.5 g/10 min to 2.8 g/10 min.

7.  The polyethylene according to Claim 1, wherein the polyethylene has $MI_{21.6}$ (melt index measured at 190 °C under a load of 21.6 kg) of 3 g/10 min to 33.6 g/10 min.

8.  The polyethylene according to Claim 1, wherein the polyethylene has a melt flow rate ratio ($MFRR_{21.6/5}$) of 2 to 12, wherein the melt flow rate ratio $MFRR_{21.6/5}$ is obtained by dividing a melt index measured at 190 °C under a load of 21.6 kg by the melt index measured at 190 °C under the load of 5 kg in accordance with ASTM D 1238.

9.  The polyethylene according to Claim 1, wherein the polyethylene has a density of 0.945 $g/cm^3$ to 0.960 $g/cm^3$.

10. A vulcanizable chlorinated polyethylene composition comprising a chlorinated polyethylene prepared by reacting the polyethylene according to any one of Claims 1 to 9 with chlorine, a sulfide-based cross-linking agent or a derivative thereof, and an amine compound or a derivative thereof.

11. The vulcanizable chlorinated polyethylene composition according to Claim 10, wherein the sulfide-based cross-linking agent comprises a thiadiazole-based compound or a disulfide-based compound.

12. The vulcanizable chlorinated polyethylene composition according to Claim 10, wherein the sulfide-based cross-linking agent comprises at least one selected from the group consisting of 2,5-dimercapto-1,3,4-thiadiazole and 5,5'-dithiodi-1,3,4-thiadiazole-2(3H)-thione.

13. The vulcanizable chlorinated polyethylene composition according to Claim 10, wherein the sulfide-based cross-linking agent or the derivative thereof is contained in an amount of 0.1 parts by weight to 4 parts by weight based on 100 parts by weight of the chlorinated polyethylene.

14. The vulcanizable chlorinated polyethylene composition according to Claim 10, wherein the amine compound comprises at least two $C_{4-20}$ alkyl groups in its structure.

15. The vulcanizable chlorinated polyethylene composition according to Claim 10, wherein the amine compound comprises at least one selected from the group consisting of dihexadecylamine and trihexadecylamine.

16. The vulcanizable chlorinated polyethylene composition according to Claim 10, wherein the amine compound or the derivative thereof is contained in an amount of 0.1 parts by weight to 2 parts by weight based on 100 parts by weight of the chlorinated polyethylene.

**17.** The vulcanizable chlorinated polyethylene composition according to Claim 10, wherein a rate of change in Mooney viscosity over time (%) according to the following Equation 1 is 20% or less:

[Equation 1]

Rate of change in Mooney viscosity over time (%) = [(MV2-MV1) / MV1] X 100

wherein in Equation 1,

MV1 is an initial Mooney viscosity measured immediately after preparing the vulcanizable chlorinated polyethylene composition under conditions of ML1+4 (125 °C) in accordance with ASTM D 1646, and

MV2 is a Mooney viscosity after aging measured after storing the vulcanizable chlorinated polyethylene composition in an oven at 40 °C for 2 weeks under conditions of ML1+4 (125 °C) in accordance with ASTM D 1646.

**18.** A chlorinated polyethylene vulcanizate obtained by vulcanizing the vulcanizable chlorinated polyethylene composition according to Claim 10.

## INTERNATIONAL SEARCH REPORT

| International application No. |
|---|
| **PCT/KR2022/018292** |

### A.  CLASSIFICATION OF SUBJECT MATTER

**C08F 110/02**(2006.01)i; **C08F 8/22**(2006.01)i; **C08L 23/28**(2006.01)i; **C08K 5/46**(2006.01)i; **C08K 5/17**(2006.01)i; **C08K 5/00**(2006.01)i

According to International Patent Classification (IPC) or to both national classification and IPC

### B.  FIELDS SEARCHED

Minimum documentation searched (classification system followed by classification symbols)

C08F 110/02(2006.01); C08F 2/38(2006.01); C08F 4/6592(2006.01); C08F 8/20(2006.01); C08F 8/34(2006.01); C08K 5/05(2006.01); C08K 5/14(2006.01); C08L 23/28(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 폴리에틸렌(polyethylene), 분자량 분포(molecular weight distribution), 복소 점도 (complex viscosity), 용융 지수(melt index), 염소화(chlorinated), 가황(vulcanization)

### C.  DOCUMENTS CONSIDERED TO BE RELEVANT

| Category* | Citation of document, with indication, where appropriate, of the relevant passages | Relevant to claim No. |
|---|---|---|
| X | KR 10-2020-0071034 A (LG CHEM, LTD.) 18 June 2020 (2020-06-18)<br>See paragraphs [0060], [0433]-[0449], [0485] and [0487]; and table 1. | 1-9 |
| Y | | 10-18 |
| Y | JP 2005-126617 A (DAISO CO., LTD.) 19 May 2005 (2005-05-19)<br>See paragraphs [0010], [0015] and [0031]-[0033]; and claims 1-3 and 9. | 10-18 |
| A | KR 10-2021-0037572 A (LG CHEM, LTD.) 06 April 2021 (2021-04-06)<br>See entire document. | 1-18 |
| A | KR 10-2021-0041515 A (LG CHEM, LTD.) 15 April 2021 (2021-04-15)<br>See entire document. | 1-18 |
| A | US 4745147 A (HONSBERG, Wolfgang) 17 May 1988 (1988-05-17)<br>See entire document. | 1-18 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **28 February 2023** | **28 February 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2022/018292**

| Patent document cited in search report | | | Publication date (day/month/year) | Patent family member(s) | | | Publication date (day/month/year) |
|---|---|---|---|---|---|---|---|
| KR | 10-2020-0071034 | A | 18 June 2020 | CN | 112088173 | A | 15 December 2020 |
| | | | | CN | 112088174 | A | 15 December 2020 |
| | | | | CN | 112088175 | A | 15 December 2020 |
| | | | | EP | 3770187 | A1 | 27 January 2021 |
| | | | | EP | 3770187 | A4 | 14 July 2021 |
| | | | | EP | 3778663 | A1 | 17 February 2021 |
| | | | | EP | 3778663 | A4 | 28 July 2021 |
| | | | | EP | 3778665 | A1 | 17 February 2021 |
| | | | | EP | 3778665 | A4 | 25 August 2021 |
| | | | | KR | 10-2020-0071035 | A | 18 June 2020 |
| | | | | KR | 10-2020-0071036 | A | 18 June 2020 |
| | | | | KR | 10-2252430 | B1 | 14 May 2021 |
| | | | | KR | 10-2427755 | B1 | 01 August 2022 |
| | | | | KR | 10-2427756 | B1 | 01 August 2022 |
| | | | | US | 2021-0047443 | A1 | 18 February 2021 |
| | | | | US | 2021-0163640 | A1 | 03 June 2021 |
| | | | | US | 2021-0230323 | A1 | 29 July 2021 |
| | | | | WO | 2020-122560 | A1 | 18 June 2020 |
| | | | | WO | 2020-122561 | A1 | 18 June 2020 |
| | | | | WO | 2020-122562 | A1 | 18 June 2020 |
| JP | 2005-126617 | A | 19 May 2005 | None | | | |
| KR | 10-2021-0037572 | A | 06 April 2021 | CN | 113039217 | A | 25 June 2021 |
| | | | | CN | 113166316 | A | 23 July 2021 |
| | | | | EP | 3865517 | A1 | 18 August 2021 |
| | | | | EP | 3865522 | A1 | 18 August 2021 |
| | | | | JP | 2022-508115 | A | 19 January 2022 |
| | | | | JP | 7118500 | B2 | 16 August 2022 |
| | | | | KR | 10-2021-0037576 | A | 06 April 2021 |
| | | | | US | 2022-0017657 | A1 | 20 January 2022 |
| | | | | US | 2022-0017663 | A1 | 20 January 2022 |
| | | | | WO | 2021-060907 | A1 | 01 April 2021 |
| | | | | WO | 2021-060908 | A1 | 01 April 2021 |
| KR | 10-2021-0041515 | A | 15 April 2021 | CN | 113631592 | A | 09 November 2021 |
| | | | | EP | 3936541 | A1 | 12 January 2022 |
| | | | | JP | 2022-528164 | A | 08 June 2022 |
| | | | | US | 2022-0177614 | A1 | 09 June 2022 |
| | | | | WO | 2021-071226 | A1 | 15 April 2021 |
| US | 4745147 | A | 17 May 1988 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210159747
- KR 1020220154687
- JP 55039250 A
- JP 53003439 A